# EUROPEAN PATENT APPLICATION

(11) **EP 1 739 558 A1**
(43) Date of publication of application: **03.01.2007**
(21) Application number: 06113456.5
(22) Date of filing: 03.05.2006
(51) Int. Cl.: G06F 11/34

(54) **Method, computer program and device to automatically predict performance shortages of databases**

(30) Priority: 29.06.2005 EP 05105840
(71) Applicant: International Business Machines Corporation, Armonk, NY 10504 (US)
(72) Inventor: Reichert, Michael, 71032 Böblignen (DE); Steinbach, Torsten, 71032 Böblingen (DE)
(74) Representative: Klein, Hans-Jörg

(57) **Abstract**

A Method for self controlled early detection and prediction of a performance shortage of an application (1) is described, comprising the steps of
- monitoring of at least one performance parameter of the application,
- storing of performance data comprising the time dependency of said performance parameter,
- use of said performance data to compute a mathematic function describing a time dependent development of said performance parameter,
- use of said mathematical function to compute a point in time when the performance parameter exceeds a certain threshold, and
- generation and output of a prediction comprising information that a performance shortage of the application is expected at said computed point in time, if said point in time lies within a settable timeframe.

## Description

### Technical field:

The present invention relates to detection and prediction of performance shortages of applications, storage devices and the like by monitoring performance parameters like used memory or storage, used CPU capacity, frequency of application processes and the like.

### Background of the invention:

Today it is very important to provide professional applications like e.g. databases that require low maintenance effort. Such effort typically include ensuring constantly high efficiency and performance of the application. The constantly high efficiency and performance is reached by supporting the application at least with the minimum resources required. If a resource gets damaged or full, the task is to recognize this and to solve the problem, e.g. by dynamically extending full storage devices, servers and the like.

Thereby it is very important to know when to perform such counter reactions.

According to the state of the art, thresholds are defined for certain performance parameters being a degree for the performance of the application, like e.g. the frequency of processes carried out by the application or table space fill grade, or for performance parameters influencing the performance of the application, like e.g. free CPU capacity, free memory or free storage space. In the following, all parameters influencing the performance of an application or being able to be used to indicate the performance of an application are called performance parameters. If a performance parameter exceeds its threshold, an exception occurs and an administrator, like e.g. a database administrator, DBA, is informed. Such thresholds can be e.g. 90% table space fill grade reached, 80% disc storage used, and the like. The thresholds preferably are defined in a way that the application provides full performance until one ore more performance parameters reaching their thresholds. Within periodic time intervals, measurements are carried out to control if the performance parameters are still beyond or already above the thresholds.

Thereby the thresholds are defined without taking into consideration the time dependent progression of the performance parameters in the past. So it is thinkable that a performance parameter will exceed its threshold between two measurements. To minimize these problems it is known to set warning thresholds below said thresholds described above.

The disadvantage of the state of the art is, that there is no temporal prediction when and if a performance parameter will reach the higher threshold after exceeding the lower warning threshold. According to the state of the art, many unnecessary exception alerts are generated when one or more performance parameters exceed the lower warning threshold, wherein all exception alerts have to be evaluated by the administrator manually. Thereby the administrator has to decide if the performance parameter will exceed the higher threshold. He also has to determine the point in time the performance parameter will exceed the higher threshold because if this would only occur far in the future, no action has to be taken at the very moment.

### Technical purpose of the invention:

The technical purpose of the invention is to develop a method that generates no or less unnecessary exceptions, plus a computer program product that allows to execute the method on a computer, plus a device that can be used to execute said method.

### Disclosure of the invention and its advantages:

The invention's technical purpose is met by the proposed method for self controlled early detection and prediction of a performance shortage of an application, comprising the steps of
- monitoring of at least one performance parameter of the application, like e.g. memory or storage usage, CPU usage, frequency of performed application processes, access time and the like,
- storing of performance data comprising the time dependency of said performance parameter,
- use of said stored performance data to compute a mathematic function describing a time dependent development of said performance parameter,
- use of said mathematical function to compute a point in time when the performance parameter exceeds a certain threshold, and
- generation and output of a prediction comprising information that a performance shortage of the application is expected at said computed point in time, if said point in time lies within a settable warning timeframe.

The term monitoring means thereby constant as well as periodic monitoring.

Thereby, the mathematic function is getting more and more exact the longer the monitoring of the performance parameter takes place. When long term monitoring takes place, the mathematic function is more and more getting able to consider long term trends, e.g. such as periodic raising and declining of memory or storage use, e.g. raising use from Monday to Friday, and freeing of memory or storage from Saturday to Sunday when swapping of data takes place, e.g. from a disc storage to a tape storage. To take the raising quality of the mathematic function with increasing monitoring time into consideration, it is possible to compute a quality indication value assigned to the mathematical function. The quality indication value increases the longer the monitoring takes place. Additional properties for the quality indication are the overall number of measurements and the sampling rate, i.e. how many of the available measurements have been considered for calculating the function. This quality indication value preferably is also part of the prediction, wherein the quality indication value preferably has to exceed a settable threshold to generate a prediction. An important part of the invention is to compute the point in time when a performance shortage of the application is expected because one or more performance parameter will exceed certain thresholds defined e.g. by an administrator. Said point in time will be compared with a timeframe, e.g. 14 days, also defined by the administrator. If the point in time lies within this timeframe, a prediction preferably comprising an alert or an exception will be generated. If the point in time lies far in the future, no prediction will be generated at the very moment. This avoids generation of useless alerts.

The main advantage over the state of the art of the method according to the invention is, that it allows to reliably computing points in time, when performance shortages will occur due to one ore more performance parameters exceeding certain settable thresholds. Doing so, the invention allows to automatically identify said performance shortages e.g. with regard to their relevance in a certain settable timeframe in the near future. By doing so, e.g. unnecessary alerts concerning performance shortages far in the future can be avoided. Furthermore by computing a mathematic function describing the time dependency of the performance parameters monitored, e.g. periodic long term trends like peak loads towards week end, end of year and the like can be taken into consideration. Moreover the quality of the mathematic function raises the longer the monitoring takes place. This results in a raising reliability of the predictions generated according to this method. Furthermore, no warning threshold is required anymore.

In a preferred embodiment of said invention, a quality indication value is computed and assigned to the mathematic function, wherein a prediction is only generated, if said quality indication value is higher than a settable quality threshold. Preferably the quality indication value increases the longer the monitoring takes place. This is because long-term trends, like e.g. periodic trends can be reliably considered within the mathematic function the longer the monitoring takes place.

In a preferred embodiment of said invention, the mathematic function takes into consideration experience values, e.g. gained from similar applications. The experience values can be stored together with the performance data e.g. in a knowledge base.

In a preferred embodiment of said invention, counter measurements were carried out to verify the mathematic function by comparing trend data computed with the mathematic function and comprising estimated values for the performance parameter at defined points in time and comparing said trend data with counter measurements carried out at said defined points in time. The administrator can give said points in time. It is also thinkable to use the counter measurements to compute the quality of the mathematic function. Thereby the counter measurements are carried out continuously or in settable intervals of time. Preferably the settable intervals also trigger the points in time trend data are computed for.

In a preferred embodiment of said invention, the prediction comprises information about the kind of performance parameter that is estimated to exceed its threshold at said computed point in time. It is also thinkable, that the prediction comprises an exception.

In another preferred embodiment of said invention, the monitoring of the performance parameter and the storing of performance data as well as the computing the mathematic function takes place continuously or in settable intervals of time.

According to the invention, the monitored performance parameter comprises e.g. the memory used by said application and/or the storage used by said application and/or the CPU capacity used by said application and/or the frequency of processes performed bv said application. It is also thinkable that the monitored performance parameter comprises the access time of said application, e.g. the access time on a storage device.

In a preferred embodiment of the invention, the application comprises a database.

In a particularly preferred embodiment of said invention, instead of the description of the time dependant development of the performance parameter, the mathematic function describes a time dependent development of the performance of the application and wherein the mathematic function is used to compute a point in time when the performance of said database is falling below a certain threshold.

In another particularly preferred embodiment of said invention, instead of the performance of an application, the method is used to predict the performance of a storage device and wherein the performance parameter comprises the used space on said storage device. Such a method can be used to predict a point in time when the storage device has no more free space left or the space left is smaller than a settable limit of free space. This could be used e.g. to prepare the exchange of said storage device, e.g. for a hot swap storage device.

In a preferred embodiment of said invention, said storage device is used by a database.

In a particularly preferred embodiment of the invention, said method is performed by a computer program product stored on a computer usable medium comprising computer readable program means for causing a computer to perform the method mentioned above, when said computer program product is executed on a computer.

The last part of the technical purpose of the invention is met by a device according to Claim 18, comprising means to monitor at least one performance parameter of an application, means to store performance data comprising the time dependency of said performance parameter of said application, means to compute a mathematic function describing a time dependent development of said performance parameter using the collected and stored performance data, means to use said mathematic function to compute a point in time, when the performance parameter is excepted to exceed a certain settable threshold and the performance of a database will decrease, means to decide if said point in time lies within a settable warning timeframe and means to generate and output a prediction comprising information that a performance shortage of the application is expected at said computed point in time, if said point in time lies within said settable timeframe.

In a preferred embodiment of the invention, the device also comprises means to compute and assign a quality indication value to said mathematic function, wherein said quality indication value increases the longer the monitoring takes place, and wherein the device comprises means to compare said quality indication value with a settable quality threshold. It is also thinkable that the device also comprises means to store experience values to be used to compute said mathematic function and/or means to perform said application.

Another preferred embodiment of the device according to the invention is characterized by means to perform counter measurements.

A particularly preferred embodiment of the invention is characterized in that the means to decide if said point in time lies within a settable warning timeframe and the means to generate and output a prediction comprising information that a performance shortage of the application is expected at said computed point in time, if said point in time lies within said settable timeframe, comprise an exception agent.

In another preferred embodiment of the invention, the means to store performance data comprising the time dependency of said performance parameter of said application comprise a knowledge base. It is also thinkable that the means to store experience values to be used to compute said mathematic function comprise a knowledge base.

A preferred embodiment of the invention is characterized in that the means to compute the mathematic function comprise a trend agent.

A particularly preferred embodiment of the invention is characterized in that said device comprises a knowledgebase to be used to store performance data, to provide said performance data to a trend agent computing said mathematic function, and to store trend data comprising the time dependant development of the performance parameter computed with said mathematic function, wherein said knowledge base provides said trend data to an exception agent deciding to generate a prediction if said trend data comprise information, that the performance parameter will exceed its threshold within a settable timeframe.

The foregoing, together with other objects, features, and advantages of this invention can be better appreciated with reference to the following specification, claims and drawings.

### Brief description of the drawing, with

- Fig. 1: showing a scheme of the architecture of a device according to the invention,
- Fig. 2: showing a scheme of a procedure of a method according to the invention, and
- Fig. 3: showing a scheme of the architecture of an implementation to be used to perform the method according to the invention.

### Paths for performing the invention:

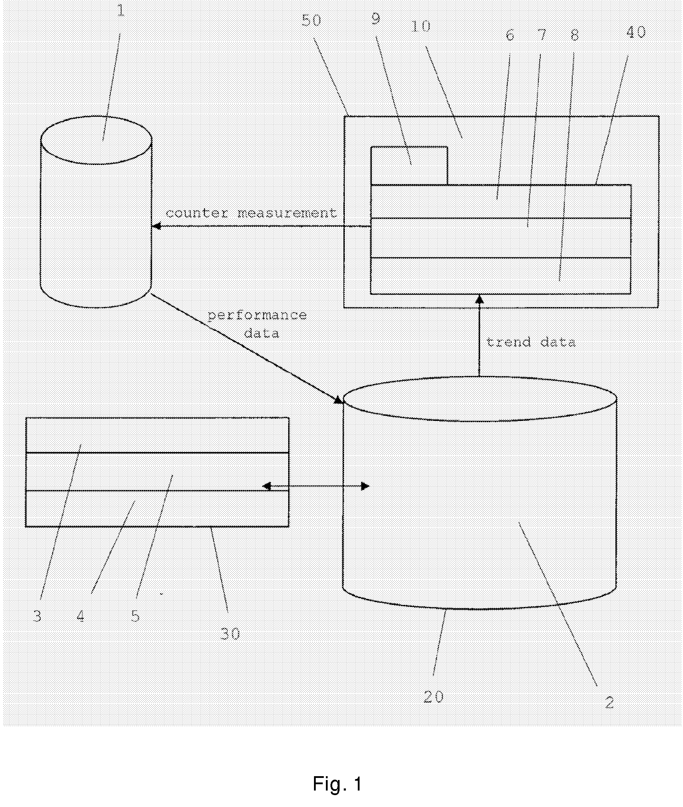

As shown in Fig. 1, a device 10 to be used to execute the method according to the invention comprises means 9 to monitor at least one performance parameter of a database 1, a knowledgebase 2 to store performance data comprising the time dependency of the performance parameter monitored, means 3 to compute a mathematic function describing the time dependant development of the performance parameter by using the performance data, means 4 to use said mathematic function to compute a point in time, when the performance parameter exceeds a settable threshold, means 5 to compute trend data describing values of the performance parameter in discrete intervals of time, means 6 to carry out counter measurements to verify the quality of the mathematic function, means 7 to decide if said point in time lies within a settable warning timeframe and means 8 to generate and output a prediction comprising information that a performance shortage of the application is expected at said computed point in time, if said point in time lies within said settable timeframe.

From an architectural point of view, the device 10 comprises a performance monitoring system 50, a knowledge base 20, a trend agent 30 and an exception agent 40. The trend agent 30 comprises the means 3 to compute a mathematic function describing the time dependant development of the performance parameter by using the performance data, the means 4 to use said mathematic function to compute a point in time, when the performance parameter exceeds a settable threshold, and the means 5 to compute trend data describing values of the performance parameter in discrete intervals of time. Due to this, the trend agent 30 is responsible to compute the mathematic function, the point in time, when the performance parameter exceeds its threshold, and to compute trend data. The knowledgebase 20 is used to store the performance data gained from monitoring the database 2. The knowledgebase 20 provides said performance data to the trend agent 30 to compute the mathematic function. The trend data computed by the trend agent 30 using the mathematic function are also stored in the knowledgebase 20. The knowledgebase provides said trend data to the exception agent 40 which comprises the means 6 to carry out counter measurements to verify the quality of the mathematic function, the means 7 to decide if said point in time lies within a settable warning timeframe and the means 8 to generate and output a prediction comprising information that a performance shortage of the application is expected at said computed point in time, if said point in time lies within said settable timeframe. Due to this the exception agent 40 is responsible to carry out the counter measurements, to compare the counter measurements with the trend data, and to compute a quality indication value indicating the quality of the mathematic function. Thereby the quality indication value is computed by comparing the trend data with the counter measurements. Furthermore the exception agent is responsible to compare the point in time the performance parameter exceeding its threshold computed by the trend agent with a warning timeframe given by the administrator. The exception agent also compares the quality indication value with a quality threshold also given by the administrator. If the exception agent comes to the decision that the point in time the performance parameter exceeds its threshold lies within the warning timeframe and the quality indication value is higher than the quality threshold, the exception agent generates a prediction. Said prediction comprises information which performance parameter will at what point in time exceeding its threshold. The exception agent automatically sends this prediction to the administrator.

Generally the boundary of the performance monitoring system 50 can also include the knowledgebase 20 and the trend agent 30.

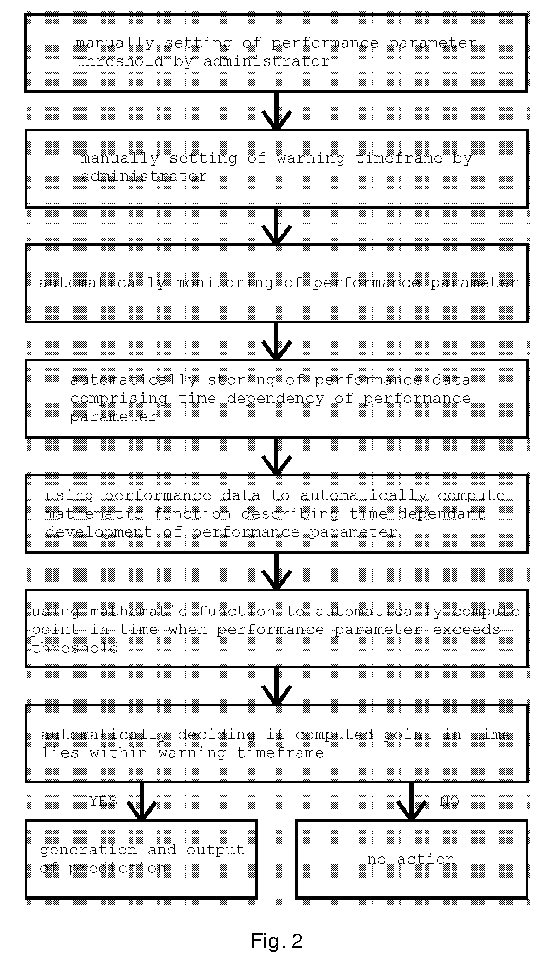

Fig. 2 shows a procedure of the method according to the invention. To prepare the automatically procedure of the method, first an administrator like e.g. a database administrator, has to set thresholds for the performance parameters of an application to be monitored. Preferably the thresholds are set in a way that the performance of the application will not decrease until said performance parameter exceeding its threshold. The application can be e.g. the database 1 in Fig. 1. After setting of the threshold and of the warning timeframe, the method starts with automatically monitoring one or more performance parameters of the application. These performance parameters can comprise the resources used by the application, e.g. the memory used by the application, like e.g. the random access memory, the space of a storage device used by the application, like e.g. the space on a disc storage, the CPU consumption of the application and the like. Thereby the thresholds preferably define the ratio of used resources to the total capacity of the resources assigned to the application. The time dependency of the performance parameters is stored e.g. in a knowledgebase 2 as shown in Fig. 1 in the form of performance data. In a further step these performance data comprising the time dependency of the performance parameters are used to automatically compute a mathematic function describing the time dependant development of one or more performance parameters. Now the mathematical function is used to compute a point in time when one or more performance parameters exceed their thresholds. At this point in time the performance of the application declines and a performance shortage occurs. The point in time is compared with the warning timeframe defined in the very beginning by the administrator. The warning timeframe always comprises the very moment and ends in the near future, e.g. in 14 days. A decision is made if the computed point in time lies within the warning timeframe by comparing the point in time with the warning timeframe. If this is true, a prediction is automatically generated comprising information at what point in time which performance parameter will exceed its threshold. This prediction is sent automatically to the administrator.

Additional it can be foreseen to use the mathematic function not only to compute a point in time when one or more performance parameters exceed their thresholds but also to compute trend data describing the development of the performance parameters in the future. These trend data can be used to compare the quality of the mathematic function and the quality of the prediction comprising information about what performance parameter will exceed its threshold at what point in time. To compare the quality of the mathematic function, counter measurements of the monitored performance parameters can be carried out, wherein said counter measurements automatically are compared with the trend data. This comparison can be used to compute a quality indication value to be assigned to the mathematic function. Doing so, it is thinkable to only generate a prediction, if the quality indication value exceeds a quality threshold defined by the administrator.

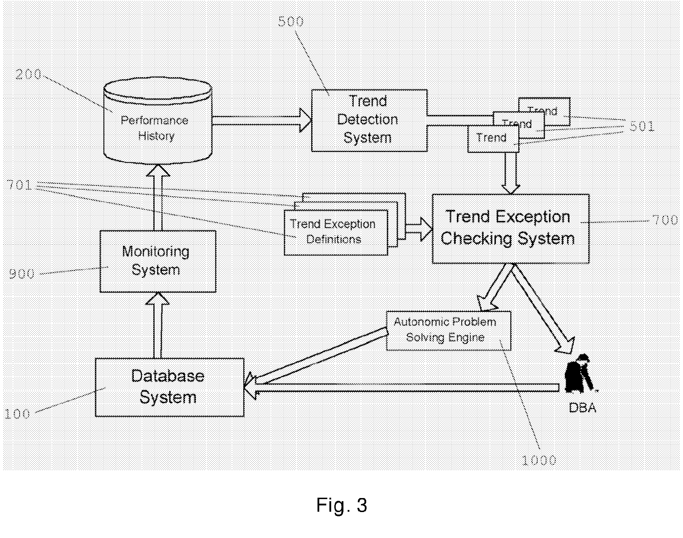

An overview over the architecture of a software implementation to be used to perform the method according to the invention is given in Fig. 3. The basic idea is to have a service that proactively performs trend exception checking. For doing so, first the performance of an application, a hardware device or the like have to be monitored. In Fig. 3, the performance of a database system 100, e.g. comprising a database application and a storage device used by the database application, is monitored. The monitoring is performed by a monitoring system 900 comprising means to continuously measure performance parameters of the database system 100. Performance data comprising the time dependency of the performance parameters monitored by the monitoring system 900 are stored in a knowledgebase 200. The performance data stored in the knowledgebase 200 represent the performance history of the database system 100.

A trend detection system 500 analyzes the performance history to compute a mathematic function describing a time dependent development of the performance parameters stored within said knowledgebase 200. For doing so, the trend detection system 500 comprises means to compute a mathematic function by using the performance data.

Thereby the trend detection system 500 analyzes the performance history and generates a mathematic function describing a trend out of it. Such a trend can be of different forms. The simplest case is a linear trend. More complex trends are exponential and alternating, e.g. sinus, trends. In addition a quality indication value that indicates the confidence of the trend in percent is assigned to the trend, i.e. to the mathematic function. The quality indication value is based on:
a) the sampling rate, describing how many events are considered to aggregate the trend compared to the overall number of events,
b) the absolute number of measurements
c) the deviation of real values gained from counter measurements compared to the trend curve.

The trend detection system 500 also comprises means to use said mathematic function to compute trend data 501 describing the time dependant development of the performance parameters in the future. Doing so, the trend data 501 consist of the mathematic function and of the quality indication value describing the quality of the mathematic function.

A trend exception checking system 700 compares the trend data 501 with trend exception definitions 701. Said trend exception definitions 701 comprise settable thresholds for the performance parameters, a settable warning timeframe in which the performance parameters have to exceed its thresholds to generate an exception, and a quality threshold. The trend exception definitions 701 are settable by the DBA. If the trend data 501 match the trend exception definitions 701, i.e. if the trend data comprise a quality indication value exceeding the quality threshold, a performance parameter exceeding its threshold, and a point in time lying within the warning timeframe, a prediction is generated.

Generally there are two options to deal with the predictions.

The first option is to inform the DBA. Thereby the DBA will have to organize all arrangements designated for a certain performance parameter exceeding its threshold.

The second option is to alternatively or additionally forward the prediction to an autonomic problem solving engine 1000. Both, the DBA and the autonomic problem solving engine 1000, can organize all arrangements designated for a certain performance parameter exceeding its threshold, wherein preferably the arrangements are autonomously organized by the autonomic problem solving engine 1000.

It is very important, that the trend exception checking system 700 takes special care to avoid false alarms.

According to the invention, there are basically two methods thinkable to avoid such false alarms:
First to support detailed mathematic functions taking into consideration long term trends, like e.g. periodic trends. Such trends might be e.g. alternating (sinus, jagged, etc.), exponential, linear trends. An example for such a trend is the following:
   Each Monday morning: Tablespace 40% full
   Each Saturday morning: Tablespace 70% full
   Each Sunday: some records are pruned, wherein the tablespace fill grade is reduced from 70% to 40%.
   Trend Exception is defined: Tablespace fill grade threshold 95%, warning timeframe 1 month, quality threshold 80 %.
By using the performance history, a mathematic function can be found describing an alternating trend with a period of one week. Since long term monitoring already takes place for more than the warning timeframe, the quality indication value will be computed to 95%.
By using the mathematic function, trend data 501 are computed that will not exceed the tablespace fill grade threshold within the warning timeframe. No prediction is generated.

Second to evaluate the quality indication value of a mathematic function against a quality threshold comprised in the trend exception definitions 701. Thereby the quality indication value can be computed by using counter measurements. Only if the mathematic function is proved to be reliable, predictions based on said mathematic function are allowed.

While the present invention has been described in detail, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present invention.

### Commercial applicability:

The invention is commercially applicable particularly in the field of production and operation of databases, computers or storage devices used to perform the operation of databases.

### List of reference numerals

- 1: database
- 2: knowledgebase
- 3: means to compute a mathematic function
- 4: means to use the mathematic function to compute a point in time
- 5: means to compute trend data
- 6: means to carry out counter measurements
- 7: means to decide if said point in time lies within a settable warning timeframe
- 8: means to generate and output a prediction
- 9: means to monitor a performance parameter
- 10: device
- 20: knowledgebase
- 30: trend agent
- 40: exception agent
- 50: performance monitoring system
- 100: database System
- 200: knowledgebase
- 500: trend detection system
- 501: trend data
- 700: trend exception checking system
- 701: trend exception definitions
- 900: monitoring system
- 1000: autonomic problem solving engine

## Claims

1. Method for self controlled early detection and prediction of a performance shortage of an application (1), comprising the steps of
- monitoring of at least one performance parameter of the application (1),
- storing of performance data comprising the time dependency of said performance parameter,
- use of said performance data to compute a mathematic function describing a time dependent development of said performance parameter,
- use of said mathematical function to compute a point in time when the performance parameter exceeds a certain threshold, and
- generation and output of a prediction comprising information that a performance shortage of the application is expected at said computed point in time, if said point in time lies within a settable timeframe.

2. Method according to claim 1,
wherein a quality indication value is computed and assigned to the mathematic function and wherein a prediction is only generated, if said quality indication value is higher than a settable quality threshold.

3. Method according to claim 2,
wherein the quality indication value increases the longer the monitoring takes place.

4. Method according to one of the previous claims,
wherein the mathematic function takes into consideration experience values.

5. Method according to one of the previous claims,
wherein counter measurements were carried out to verify the mathematic function by comparing trend data computed with the mathematic function with counter measurements.

6. Method according to claim 5,
wherein the counter measurements are used to compute the quality of the mathematic function.

7. Method according to claim 5 or 6,
wherein counter measurements are carried out continuously and/or in settable intervals.

8. Method according to one of the previous claims,
wherein the prediction comprises information about the performance parameter that exceeds its threshold at said computed point in time.

9. Method according to one of the previous claims,
wherein monitoring of the performance parameter and storing of performance data takes place continuously and/or in settable intervals.

10. Method according to one of the previous claims,
wherein computing the mathematic function takes place continuously.

11. Method according to one of the previous claims,
wherein computing the mathematic function takes place in settable intervals.

12. Method according to one of the previous claims,
wherein the monitored performance parameter comprises the memory used by said application.

13. Method according to one of the previous claims,
wherein the monitored performance parameter comprises the storage used by said application.

14. Method according to one of the previous claims,
wherein the monitored performance parameter comprises the CPU capacity used by said application.

15. Method according to one of the previous claims, wherein the monitored performance parameter comprises the frequency of processes performed by said application.

16. Method according to one of the previous claims, wherein the monitored performance parameter comprises the access time of said application.

17. Computer program product stored on a computer usable medium comprising computer readable program means for causing a computer to perform the method of anyone of the claims 1 to 16, when said computer program product is executed on a computer.

18. Device (9) for performing the method according to one of the previous claims, **characterized by** means (9) to monitor at least one performance parameter of an application (1), means (2) to store performance data comprising the time dependency of said performance parameter of said application, means (3) to compute a mathematic function describing a time dependent development of said performance parameter using the performance data, means (4) to use said mathematic function to compute a point in time, when the performance parameter exceeds a certain settable threshold, means (7) to decide if said point in time lies within a settable timeframe and means (8) to generate and output a prediction comprising information that a performance shortage of the application (1) is expected at said computed point in time, if said point in time lies within said settable timeframe.
